# EUROPEAN PATENT APPLICATION

(11) **EP 1 770 519 A2**
(43) Date of publication of application: **04.04.2007**
(21) Application number: 06015235.2
(22) Date of filing: 21.07.2006
(51) Int. Cl.: G06F 9/48

(54) **Information processing apparatus and its data processing method capable of forming descriptor queue**

(30) Priority: 22.07.2005 JP 2005212757
(71) Applicant: NEC Electronics Corporation, Kawasaki, Kanagawa 211-8668 (JP)
(72) Inventor: Togawa, Katsumi NEC Electronics Corp., Kawasaki Kanagawa 211-8668 (JP); Anjo, Kenichiro NEC Electronics Corp., Kawasaki Kanagawa 211-8668 (JP); Fujii, Taro NEC Electronics Corp., Kawasaki Kanagawa 211-8668 (JP)
(74) Representative: Glawe, Delfs, Moll

(57) **Abstract**

In an information processing apparatus, a descriptor queue forming unit (6) forms descriptors (DSC) each including one task command (TASKCMD) for designating one task program (TASK PRG) and corresponding to one task data (TDA) processed by the program, forms descriptor columns (Q0A, Q0B; Q1A, Q1B) each formed by linking at least two of the descriptors including the same task command, and forms descriptor queues (Q0, Q1) each formed by linking the descriptor columns. A memory (3) stores the task data and the descriptor queues. A stream processor (2) sequentially reads the descriptors from the memory in accordance with a structure of the descriptor queues and perform processings upon the task data corresponding to the read descriptors, respectively, using respective ones of the programs indicated by the task commands of the read descriptors, respectively.

## Description

### BACKGROUND OF THE INVENTION

### Field of the Invention

The present invention relates to an information processing apparatus and its data processing method capable of realizing various kinds of processings.

### Description of the Related Art

An information processing apparatus has been required to have a higher capability of processing a large amount of data such as moving video data at a higher speed, so that such an information processing apparatus has not only a host processor such as a central processing unit (CPU) but also digital signal processors (DSPs) or application specific integrated circuit (ASIC) units for decreasing the processing load of the host processor.

On the other hand, in an information processing apparatus, various kinds of data encoding/decoding processings are required for processing multi-media data such as stationary video data, moving video data, audio data and music data. Also, various kinds of communication protocols are used for transmitting/receiving data via networks such as the Internet. Further, encipherment/decipherment processings are required for maintaining data security protection.

Thus, in order to completely decrease the processing load of the host processor, a large number of DSPs or ASIC units are required, which would increase the information processing apparatus in size and in manufacturing cost.

Instead of providing a large number of DSPs and ASIC units, a prior art information processing apparatus is constructed by a programmable logic device (PLD) whose task program is changed by a changing section as occasion demands (see: JP-11-184718 A).

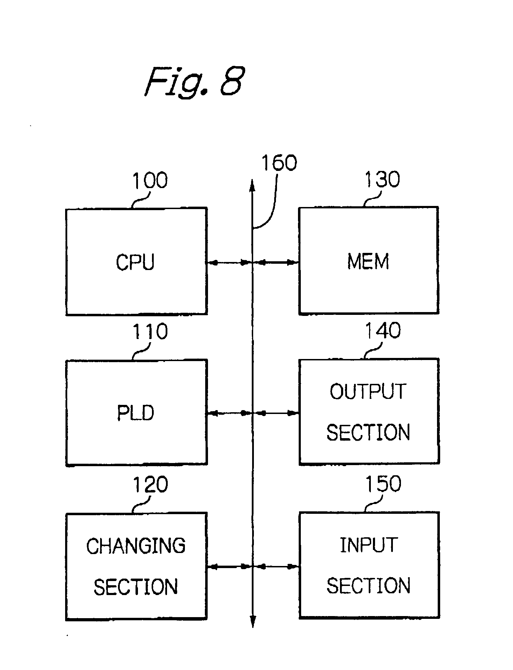

In Fig. 8, which is a block circuit diagram illustrating the above-mentioned prior art information processing apparatus, this information processing apparatus is constructed by a central processing unit (CPU) 100 as a host processor for carrying out a processing using operating systems (OSs), application programs and the like, a programmable logic device (PLD) 110 for carrying out a specific processing (which is called a task) using a specific program (which is called a task program) instead of the CPU 100, a changing section 120 for changing the task program executed by the PLD 110, a memory 130 for storing the operating systems (OSs), the application programs, the task programs and various data such as task data and intermediate data, an output section 140 for outputting processed data, processing status information and so on to the exterior, and an input section 150 for inputting data to be processed from the exterior. The CPU 100, the PLD 110, the changing section 120, the memory 130, the output section 140, and the input section 150 are connected by a bus 160 to each other.

The CPU 100 carries out a processing using the operating systems (OSs), the application programs and the like. The PLD 110 is provided with an internal memory for storing a task program. Therefore, the changing section 120 controls the PLD 110 in accordance with instructions from the CPU 100 so that the PLD 110 loads a task program from the memory 130 to the internal memory. As a result, the PLD 110 carries out a task using the loaded task program. Note that, since the PLD 110 cannot load a task program into the internal memory of the PLD 110 per se, such a task program is loaded into the memory of the PLD 110 by the CPU 100 and the changing section 120.

That is, every time the CPU 100 needs to make the PLD 110 carry out a task, the CPU 100 transmits a load request for loading a task program of the task and information specifying the task program to the changing section 120. Also, the CPU 100 transmits task data to be carried out to the PLD 110.

On the other hand, when the changing section 120 has received the above-mentioned load request from the CPU 100, the changing section 120 reads a task program designated by the CPU 100 from the memory 130 and loads it into the internal memory of the PLD 110. As a result, the PLD 110 changes its internal circuit to perform a task upon the task data using the received task program. After the task is completed, the PLD 110 generates an interrupt signal and transmits it to the CPU 100. Then, the CPU 100 again determines the next task to be carried out by the PLD 110. As a result, when the next task is the same as the one carried out immediately before by the PLD 110, the CPU 100 transmits the next task data to the PLD 110. Contrary to this, when the next task is different from the one carried out immediately before by the PLD 110, the CPU 100 transmits a load request for loading another task program and information specifying the next task program, thus renewing the task program stored in the internal memory of the changing section 120.

Thus, in the information processing apparatus of Fig. 8, task programs carried out by the PLD 110 are changed by the changing section 120 to process various tasks, which would decrease the size and manufacturing cost of the information processing apparatus of Fig. 8.

### SUMMARY OF THE INVENTION

In the information processing apparatus of Fig. 8, however, when a plurality of task programs, which cannot be stored simultaneously in the internal memory of the PLD 110, are required to be carried out by the PLD 110, since the PLD 110 cannot realize a circuit for carrying out such task programs simultaneously, some of the task programs are loaded into the internal memory of the PLD 110 while the others stored in the memory 130 would be replaced with the task programs loaded into the internal memory.

In addition, in the information processing apparatus of Fig. 8, when a plurality of task data are processed by using a plurality of corresponding task programs, the task data are not always sorted out for each of the task programs. Therefore, if the PLD 110 processes the task data on a first-in, first-out basis, the loading operations of task programs from the memory 130 into the internal memory of the PLD 110 and the saving operations of task programs from the internal memory of the PLD 110 are frequently carried out, so that the throughput of the PLD 110 would be decreased and the apparatus would not exhibit a sufficient performance ability.

On the other hand, a data-array type processor whose data path can be changed by using programs is known to correspond to the PLD 110 of the information processing apparatus of Fig. 8 (see: JP-2001-312481 A, JP-2003-196246 A, and Hideharu Amano, Akiya Jouraku and Kenichiro Anjo, "A dynamically adaptive switch fabric on a multicontext reconfigurable device", Proceeding of International Field Programmable Logic and Application Conference, pp.161-170, September 2003).

For example, in JP-2003-196246 A, an array-type information processing apparatus is constructed by a host processor (CPU), a stream processor formed by an array-type processor unit including a plurality of processor elements arranged in an array and an input/output control circuit for controlling input/output operations of the array-type processor unit, and an external memory for storing task programs and intermediate data for the stream processor. Due to the presence of the array-type processor unit, a plurality of processings can be carried out in parallel.

Also, in JP-2003-196246 A, the array-type processor unit includes an instruction memory for storing task programs and input registers for storing intermediate data used for carrying out a task. In the same way as the PLD 110 of Fig. 8, even this array-type processor unit cannot load task programs from the external memory into the instruction memory. On the other hand, since the instruction memory and the internal registers are mapped in a memory space manageable by the CPU, the CPU can load task programs and intermediate data from the external memory into an arbitrary area of the instruction memory and an arbitrary area of the internal registers, respectively, and read or save intermediate data from an arbitrary area of the internal registers to the external memory.

In the above-described stream processor, when a plurality of task data are processed by using a plurality of corresponding task programs, the task data are not always sorted out for each of the task programs. Therefore, if the stream processor processes the task data on a first-in, first-out basis, the loading operations of task programs from the memory into the internal instruction memory of the array-type processor unit and the saving operations of task programs from the internal instruction memory of the array-type processor unit are frequently carried out, so that the throughput of the stream processor would be decreased and the apparatus would not exhibit a sufficient performance ability.

The present invention is intended to suppress the decrease of the throughput of a stream processor to exhibit a performance ability.

In order to achieve the above-mentioned object, an information processing apparatus according to the present invention comprises:
a descriptor queue forming unit adapted to form descriptors each including one task command for designating one program and corresponding to one task data processed by the program, form descriptor columns each formed by linking at least two of the descriptors including the same task command, and form descriptor queues each formed by linking the descriptor columns;
a memory adapted to store the task data and the descriptor queues; and
a stream processor adapted to sequentially read the descriptors from the memory in accordance with a structure of the descriptor queues and perform processings upon the task data corresponding to the read descriptors, respectively, using respective ones of the programs indicated by the task commands of the read descriptors, respectively.

On the other hand, a data processing method for processing task data in accordance with predetermined programs using a stream processor according to the present invention comprises:
forming descriptors each including one task command for designating one program and corresponding to one task data processed by the program using a central processing unit;
forming descriptor columns each formed by linking at least two of the descriptors including the same task command using the central processing unit;
forming descriptor queues each formed by linking the descriptor columns using the central processing unit;
storing the task data and the descriptor queues in a memory using the central processing unit;
sequentially reading the descriptors from the memory in accordance with a structure of the descriptor queues using the stream processor; and
performing processings upon the task data corresponding to the read descriptors, respectively, using respective ones of the programs indicated by the task commands of the read descriptors, respectively, using the stream processor.

According to the information processing apparatus and the data processing method of the present invention, descriptor columns are formed by linking descriptors having the same task command to each other, and one descriptor queue is formed by linking the descriptor columns, so that the descriptors are successively read in accordance with the structure of the descriptor queue to perform successive tasks upon task data corresponding to the read descriptors, the number of load operations of task programs into the array-type processor unit can be minimized.

### BRIEF DESCRIPTION OF THE DRAWINGS

The present invention will be more clearly understood from the description set forth below, with reference to the accompanying drawings, wherein:
Fig. 1 is a block diagram illustrating an embodiment of the information processing apparatus according to the present invention;
Fig. 2 is a format diagram of a descriptor used in the information processing apparatus of Fig. 1;
Fig. 3 is a diagram illustrating an example of the descriptor queue used in the information processing apparatus of Fig. 1;
Fig. 4 is a flowchart showing the entire operation of the CPU of Fig. 1;
Fig. 5 is a detailed flowchart of the descriptor sorting-out step of Fig. 4;
Fig. 6 is a detailed flowchart of the descriptor queue forming step of Fig. 4;
Fig. 7 is a timing diagram for explaining the operation of the information processing apparatus of Fig. 1; and
Fig. 8 is a block diagram illustrating a prior art information processing apparatus.

### DESCRIPTION OF THE PREFERRED EMBODIMENT

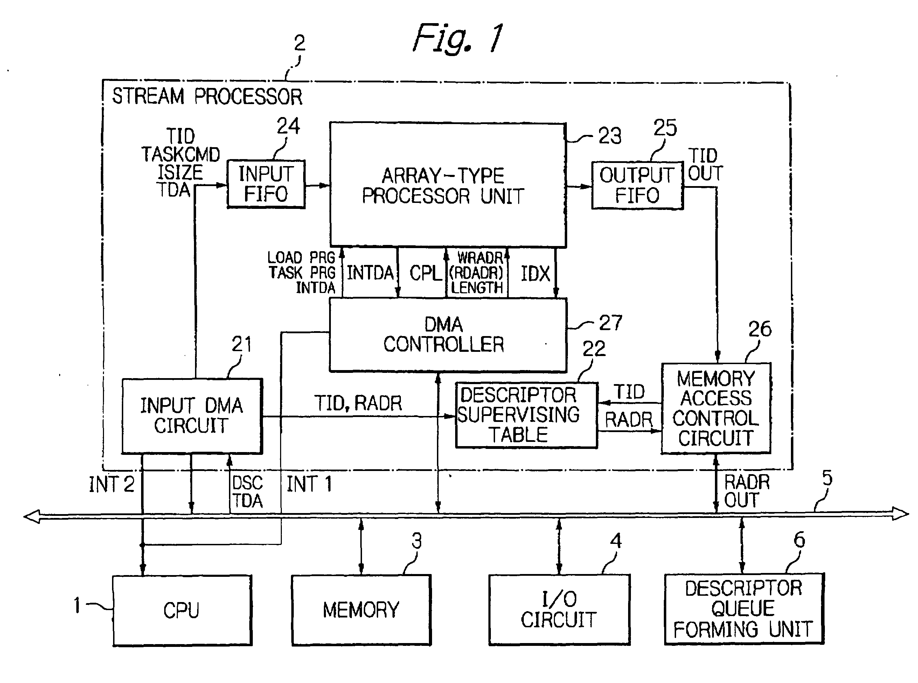

In Fig. 1, which illustrates an embodiment of the information processing apparatus according to the present invention, this information processing apparatus is constructed by a CPU 1 as a host processor, a stream processor 2 provided with an array-type processor for performing tasks upon task data using task programs, a memory 3, an input/output circuit 4 as an interface for an input unit and an output unit (not shown), and a descriptor queue forming unit 6 for forming descriptors each corresponding to one task data, descriptor columns each corresponding to one task program, i.e., one task command, and descriptor queues where the descriptor columns are linked to each other. The CPU 1, the stream processor 2, the memory 3, the input/output circuit 4 and the descriptor queue forming unit 6 are connected to each other by a bus 5. In this case, the memory 3 stores programs executed by the CPU 1, task programs executed by the stream processor 2, task data processed in the stream processor 2, descriptors for processing the task data, output data of the array-type processor unit of the stream processor 2, and intermediate data used in the internal registers of the array-type processor unit of the stream processor 2. The intermediate data is loaded into the array-type processor unit and is saved therefrom as occasion demands. Note that the CPU 1 of Fig. 1 can be another processing unit such as a DSP or an ASIC unit which can control the entire information processing apparatus of Fig. 1.

The descriptor queue forming unit 6 can be constructed by a logic circuit and a memory. Alternatively, the descriptor queue forming unit 6 can be constructed by a CPU (or DSP) and an internal memory where the CPU (or DSP) carries out processings of each of the following elements by using programs stored in the internal memory.

Additionally, the descriptor queue forming unit 6 can be deleted, if the CPU 1 can perform the function of the descriptor queue forming unit 6 by using programs stored in the memory 3. Hereinafter, it is assumed that, instead of the descriptor queue forming unit 6, the CPU 1 forms descriptors, descriptor columns and descriptor queues.

The stream processor 2 is constructed by an input direct memory access (DMA) circuit 21 for reading descriptors DSC and task data TDA from the memory 3, a descriptor supervising table 22 for supervising the descriptors DSC associated with return (output data) addresses RADR from the input DMA circuit 21, an array-type processor unit 23 formed by a plurality of processor elements arranged in an array for performing tasks by using task programs, an input first-in first-out buffer (FIFO) 24 for receiving the task data TDA associated with a transaction identifier TID, a task command TCMD and a data size ISIZE of the task data TDA from the input DMA circuit 21 and supplying them to the array-type processor unit 23, an output FIFO 25 for receiving the output data OUT associated with the transaction identifier TID from the array-type processor unit 23, a memory access control circuit 26 for returning the output data OUT to the return address RADR of the memory 3 under the descriptor supervising table 22, and a DMA controller 27 for performing read/write operations of intermediate data upon the internal registers of the array-type processor unit 23. Each of the input DMA circuit 21, the descriptor supervising table 22, the memory access control circuit 26, and the DMA controller 27 can be formed by using a logic circuit and a memory. Alternatively, each of them can be constructed by a CPU (or DSP) and an internal memory where the CPU (or DSP) performs the same function using a program in the internal memory. Also, a plurality of array-type processor units can be provided instead of the single array-type processor unit 23 to realize a plurality of channels (data paths); in this case, each of the array-type processor units is associated with one input FIFO similar to the input FIFO 24 and one output FIFO similar to the output FIFO 25.

The DMA controller 27 loads a task loading program LOAD PRG, a task program TASK PRG or intermediate data INTDA1 from the memory 3 into the array-type processor unit 23 upon receipt of an index IDX from the array-type processor unit 23. Also, the DMA controller 27 reads or saves intermediate data INTDA2 from the array-type processor unit 23 to the memory 3 upon receipt of an index IDX from the array-type processor unit 23. In this case, the DMA controller 27 transmits a destination address WRADR (or a source address RDADR) pointing to a start address of the internal memory of the array-type processor unit 23 along with a transmission data length LENGTH to the array-type processor unit 23. Also, every time transmission of one task program from the DMA controller 27 to the array-type processor unit 23 is completed, the DMA controller 27 generates a completion signal CPL and transmits it to the array-type processor unit 23. Further, when loading of a task loading program LOAD PRG is completed, the DMA controller 27 generates an interrupt signal INT1 and transmits it to the CPU 1.

When the stream processor 2 carries out a task, the input DMA circuit 21 reads a descriptor DSC. Then, a task program TASK PRG is loaded from the memory 3 via the DMA controller 27 into the array-type processor unit 23 in accordance with the read descriptor DSC, while task data TDA is supplied from the memory 3 via the input DMA circuit 21 and the input FIF0 24 to the array-type processor unit 23. Then, the array-type processor unit 23 performs a task upon the task data TDA by the task program TASK PRG. Finally, output data OUT processed by the array-type processor unit 23 is returned via the output FIFO 25 and the memory access control circuit 26 to the memory 3.

One descriptor DSC is generated by the descriptor queue forming unit 6 or the CPU 1 which is operated in accordance with programs stored in the memory 3. Note that one descriptor DSC is always formed for each task data TDA.

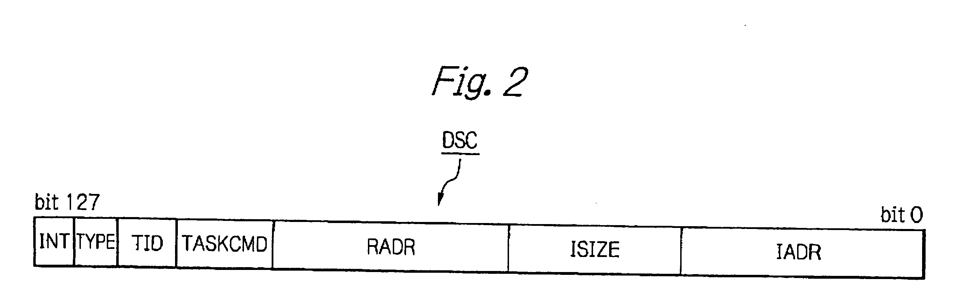

Fig. 2 shows the format of the descriptor DSC stored in the memory 3. That is, each descriptor DSC is formed by 128 bits; however, the bit width of the descriptor DSC can be set in accordance with the processing bit width of the CPU 1 and the array-type processor unit 23 or the memory space.

As shown in Fig. 2, one descriptor DSC is divided into fields defined by an interrupt flag INT, a type TYPE, a transaction identifier TID, an input data (task data) size ISIZE, a task command TASKCMD, a return (output data) address RADR, and an input data address IADR.

The interrupt flag INT is a bit used for informing a completion of processing by the stream processor 5 to the CPU 1.

The type TYPE is a bit used for maintaining the structure of a descriptor queue which will be stated later.

The transaction identifier TID is an identifier for identifying descriptors DSC from each other, i.e., input data (task data) TDA processed by the array-type processor unit 23. The transaction identifier TID along with the task data TDA is supplied from the memory 3 via the input FIF0 24 to the array-type processor unit 23, and the transaction identifier TID along with output data OUT is output from the array-type processor unit 23 via the output FIFO 25 and the memory access control circuit 26 to the memory 3.

The task command TASKCMD is an indicator for indicating a task carried out by the stream processor 2.

The input data address IADR is a pointer for pointing to a start address of the memory 3 in which task data TDA is stored. The input data size ISIZE is size data of the task data TDA. The task command TASKCMD and the input data size ISIZE along with the task data TDA are supplied to the array-type processor unit 23.

The input DMA circuit 21 has a descriptor pointer (not shown) for pointing to an address of the memory 3 from which one descriptor DSC is stored. The descriptor pointer is set by the CPU 1 using a program stored in the memory 3. When the CPU 1 makes the stream processor 2 carry out a task, a start address of a descriptor DSC corresponding to task data TDA to be processed is set by the CPU 1 in the descriptor pointer of the input DMA circuit 21.

The input DMA circuit 21 reads one descriptor DSC from the memory 3 in accordance with the value of the descriptor pointer so that task data TDA having an input data size ISIZE indicated by the input data address IADR is read by the input DMA circuit 21 from the memory 3 to the input FIFO 24. Also, the transaction identifier TID, the task command TASKCMD and the task data size ISIZE are extracted from the read descriptor DSC and transmitted via the input FIFO 24 to the array-type processor unit 23.

On the other hand, the input DMA circuit 21 extracts the transaction identifier TID and the return address RADR from the read descriptor DSC and transmits them to the descriptor supervising table 22 so that a relationship between the transaction identifier TID and the return address RADR is stored in the descriptor supervising table 22.

The input FIFO 24 sequentially stores sets each formed by one task command TASKCMD, one transaction identifier TID, one task data size ISIZE and task data TDA defined by the transaction identifier TID and the task data size ISIZE. Every time a task program TASK PRG is loaded by the array-type processor unit 23 or processing of the previous task by the array-type processor unit 23 is completed, the input FIF0 24 transmits the next set to be processed to the array-type processor unit 23. Thus, when a plurality of tasks are processed by the array-type processor unit 23, such tasks can be effectively and successively processed by the array-type processor unit 23 without stopping the operation thereof. On the other hand, while the array-type processor unit 23 loads a task program TASK PRG or intermediate data INTDA into the internal memory thereof or carries out a task using the task program TASK PRG, the input FIFO 24 can input the above-mentioned sets. Therefore, the processing efficiency of the stream processor 2 can be increased.

Every time the array-type processor unit 23 has received one task command TASKCMD from the input FIFO 24, the array-type processor unit 23 loads one task program TASK PRG via the DMA controller 27 from the memory 3, and then performs a task upon task data TDA using the task program TASK PRG. As a result, the array-type processor unit 23 generates output data OUT as a result of processing the task data TDA and transmits the output data OUT via the output FIFO 25 to the memory access control circuit 28. In this case, the array-type processor unit 23 associates the transaction identifier TID with start data of the output data OUT.

The output FIF0 25 sequentially stores output data OUT associated with its transaction identifier TID. When the memory access control circuit 26 cannot transmit output data OUT to the bus 5 due to the access competition therefor or the like, the output FIFO 25 would not transmit the output data OUT to the memory access control circuit 26. On the other hand, after the access competition state to the memory 3 has disappeared, the output FIFO 25 would transmit the output data OUT associated with the transaction identifier TID to the memory access control circuit 26. Thus, the output data 0UT of the array-type processor unit 23 can be sequentially stored in the output FIFO 25 without stopping the operation of the array-type processor unit 23. Therefore, the decrease of processing throughput of the stream processor 2 would be suppressed.

When the memory access control circuit 26 receives the output data OUT associated with the transaction identifier TID, the memory access control circuit 26 accesses the description supervising table 22 to extract the return address RADR by referring to the transaction identifier TID. As a result, the memory access control circuit 26 stores the output data OUT transmitted from the output FIFO 25 in an area of the memory 3 starting at the return address RADR.

In order to enhance the throughput of the information processing apparatus of Fig. 1, task data TDA.are sorted out for every task program TASK PRG, so as to perform successive tasks upon successive task data using the same task program TASK PRG. As a result, the number of loading task programs is decreased, thus enhancing the throughput. According to the present invention, a plurality of descriptor columns each formed by a plurality of descriptors each corresponding to one of a plurality of task data to be processed with the same task program are formed. Then, such a plurality of descriptor columns each for one of a plurality of task programs are linked to form one descriptor queue.

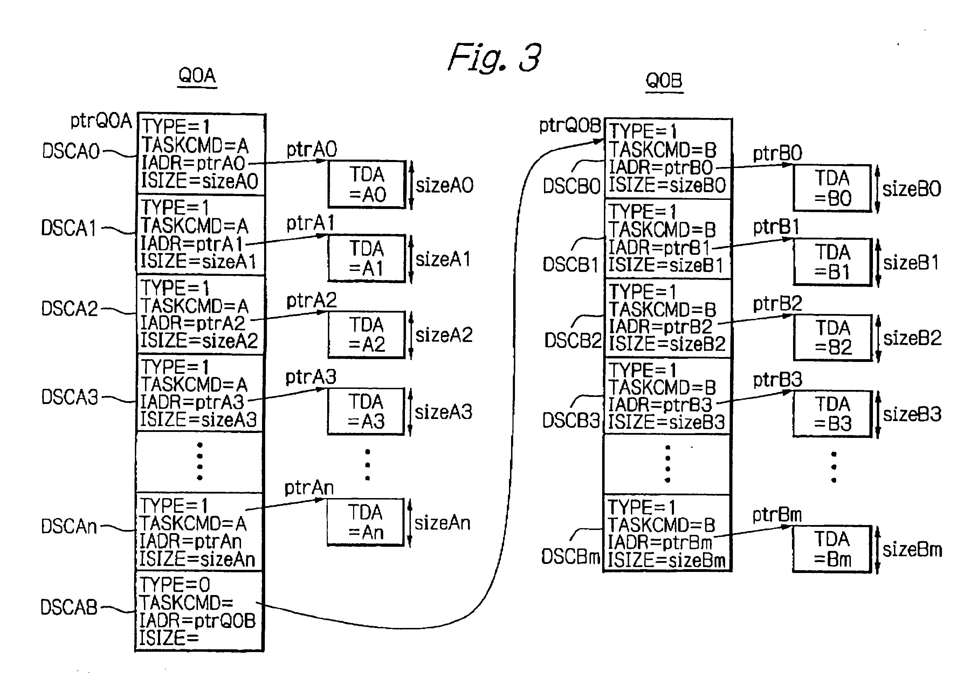

In Fig. 3, which is a diagram illustrating an example of one descriptor queue according to the present invention, each descriptor is defined by only a type TYPE, a task command TASKCMD, an input data address IADR and an input data size ISIZE of Fig. 2 for simplifying the description.

In Fig. 3, one descriptor column is formed by linking a plurality of descriptors having the same task command TASKCMD. Here, note that "linking a plurality of descriptors" means storing such descriptors in successive address areas of the memory 3.

That is, descriptors DSCA0, DSCA1, DSCA2, DSCA3, ···, DSCAn corresponding to task data (TDA) A0, A1, A2, A3, ···, An, respectively, processed by a task program defined by a task command TASKCMD=A are linked to each other to form a descriptor column Q0A starting at a descriptor pointer ptrQ0A. On the other hand, descriptors DSCB0, DSCB1, DSCB2, DSCB3, ..., DSCBm corresponding to task data (TDA) B0, B1, B2, B3, ..., Bm, respectively, processed by a task program defined by a task command TASKCMD=B are linked to each other to form a descriptor column Q0B starting at a descriptor pointer ptrQ0B.

In the stream processor 2, the input DMA circuit 21 can access the subsequent descriptors by incrementing the descriptor pointer by the data size of one descriptor such as 128 bits. Therefore, in the descriptor columns Q0A or Q0B, when the CPU 1 sets a start descriptor pointer ptrQ0A or ptrQ0B in the descriptor pointer of the input DMA circuit 21, the input DMA circuit 21 can access the subsequent descriptors by renewing the descriptor pointer therein without help of the CPU 1.

The preceding descriptor column such as Q0A includes its last descriptor DSCAB whose input data address IADR stores a link pointer of the subsequent descriptor column such as Q0B, i.e., ptrQ0B. As a result, the descriptor column Q0A is linked to the descriptor column Q0B to form a descriptor queue. Note that "0" is set in the type TYPE of the last descriptor DSCAB of the descriptor column Q0A where a link pointer is set in the input data address IADR.

Thus, the type TYPE is used for identifying the descriptor DSCAB from the other descriptors.

In more detail, in the descriptor column Q0A, the descriptor DSCA0 has the following fields:

| | |
|---|---|
| TYPE = | "1" |
| TASKCMD = | A |
| IADR = | ptrA0 |
| ISIZE = | sizeA0 |

Also, the descriptor DSCA1 has the following fields:

| | |
|---|---|
| TYPE = | "1" |
| TASKCMD = | A |
| IADR = | ptrA1 |
| ISIZE = | sizeA1 |

Finally, the descriptor DSCAn has the following fields:

| | |
|---|---|
| TYPE = | "1" |
| TASKCMD = | A |
| IADR = | ptrAn |
| ISIZE = | sizeAn |

On the other hand, in the descriptor column Q0B, the descriptor DSCB0 has the following fields:

| | |
|---|---|
| TYPE = | "1" |
| TASKCMD = | B |
| IADR = | ptrB0 |
| ISIZE = | sizeB0 |

Also, the descriptor DSCB1 has the following fields:

| | |
|---|---|
| TYPE = | "1" |
| TASKCMD = | B |
| IADR = | ptrB1 |
| ISIZE = | sizeB1 |

Finally, the descriptor DSCBm has the following fields:

| | |
|---|---|
| TYPE = | "1" |
| TASKCMD = | B |
| IADR = | ptrBm |
| ISIZE = | sizeBm |

Further, in order to link the descriptor column Q0A to the descriptor column Q0B, the last descriptor DSCAB of the descriptor column Q0A has the following fields:

| | |
|---|---|
| TYPE = | "0" |
| TASKCMD = | meaningless |
| IADR = | ptrB0 |
| ISIZE = | meaningless |

Thus, when the above-mentioned descriptor queue is generated and is stored in the memory 3 by the CPU 1 or the descriptor queue forming unit 6, the stream processor 2 sequentially reads descriptors from the memory 3 in accordance with the descriptor queue to perform successive tasks upon successive task data, so that the number of loading operations of task programs into the array-type processor unit 23 can be suppressed to enhance the throughput of the stream processor 2. Also, even when a plurality of task programs read to be loaded into the array-type processor unit 23, such task programs can be successively loaded into the array-type processor unit 23 by only one load request from the CPU 1 to the stream processor 2. Therefore, there is no processing for the CPU 100 to operate the PLD 110 to determine whether an operation for loading a task program is required for the next task in the data processing apparatus of Fig. 8. Thus, the processing burden of the CPU 1 for loading task programs can be decreased.

In the data processing apparatus of Fig. 1, a descriptor queue area for storing two descriptor queues is provided in the memory 3. That is, while the stream processor 2 carries out a processing in accordance with one of the descriptor queues, the CPU 1 or the descriptor queue forming unit 6 forms the other of the descriptor queues to be carried out by the stream processor 2. For example, while the stream processor 2 carries out a processing in accordance with a descriptor queue Q0, the CPU 1 or the descriptor queue forming unit 6 forms another descriptor queue Q1 to be carried out by the stream processor 2 and stores the descriptor queue Q1 in the memory 3. On the other hand, while the stream processor 2 carries out a processing in accordance with the descriptor queue Q1, the CPU 1 or the descriptor queue forming unit 6 forms another descriptor queue Q0 to be carried out by the stream processor 2 and stores the descriptor queue Q0 in the memory 3.

Note that the descriptor queue area is provided commonly for the descriptor queue Q0 and Q1; however, two descriptor queue areas can be provided separately for the descriptor queues Q0 and Q1.

In the embodiment, the descriptor queue which the stream processor 2 is now carrying out is determined by a flag FX (not shown) stored in the memory 3 which the CPU 1 or the descriptor queue forming unit 6 can recognize. For example, FX="0" means that the stream processor 2 is carrying out a process in accordance with the descriptor queue Q1; in this case, the CPU 1 forms descriptors each corresponding to one task data and sorts out the descriptors to descriptor columns Q0x (x=A, B, C, ··· where A, B, C, ··· are task commands) to link the descriptor columns Q0x to each other to form a descriptor queue Q0. On the other hand, FX="1" means that the stream processor 2 is carrying out a process in accordance with the descriptor queue Q2; in this case, the CPU 1 forms descriptors each corresponding to one task data and sorts out the descriptors to descriptor columns Q1x (x=A, B, C, ··· where A, B, C, ··· are task commands) to link the descriptor columns Q1x to each other to form a descriptor queue Q1. The value of the flag FX is switched from "0" to "1" or vice versa by the CPU 1 every time the CPU 1 receives an interrupt signal such as INT1 for showing a task completion from the stream processor 2.

Thus, since two descriptor queues are provided, the CPU 1 can effectively sort out descriptors each formed for one task data to descriptor columns, respectively. Also, since the CPU 1 can form the next descriptor queue to be carried out by the stream processor 2 while the stream processor 2 is carrying out a processing, the stream processor 2 can successively carry out its processings without interrupting them. Therefore, the throughput of data processing of the stream processor 2 can be enhanced.

Further, in the embodiment, if there is a common task command in the descriptor columns between a preceding descriptor queue and a subsequent descriptor queue, the task command of the last descriptor column of the preceding descriptor queue is made to coincide with that of the first descriptor column of the subsequent descriptor queue.

For example, if a preceding descriptor queue Q0 is constructed by a descriptor column Q0A having a task command TASKCMD=A and a descriptor column Q0B having a task command TASKCMD=B, and a subsequent descriptor queue Q1 is constructed by a descriptor column Q1A having a task command TASKCMD=A and a descriptor column Q1B having a task command TASXCMD=B, the CPU 1 sorts out the descriptor column Q1B as a first descriptor column of the descriptor queue Q1 if the descriptor column Q0B is a last descriptor column of the descriptor queue Q0, while the CPU 1 sorts out the descriptor column Q1A as a first descriptor column of the descriptor queue Q1 if the descriptor column Q0A is a last descriptor column of the descriptor queue Q0.

In the embodiment, the task command of the last descriptor column of a preceding descriptor queue is determined by a last task command value LAST TASKCMD (not shown) stored in the memory 3 which the CPU 1 or the descriptor queue forming unit 6 can recognize. For example, if the value LAST TASKCMD of the last descriptor column of a preceding descriptor queue is A, a descriptor column having the task command TASKCMD=A is sorted out as a first descriptor column in a subsequent descriptor queue.

Thus, since each descriptor column is sorted out as explained above, so that replacement of a task program is unnecessary at a switching of two descriptor switching queues, the number of switching task programs by the array-type processor unit 23 can be further decreased. Therefore, the throughput of the stream processor 2 and the information processing apparatus incorporating the stream processor 2 can be further improved.

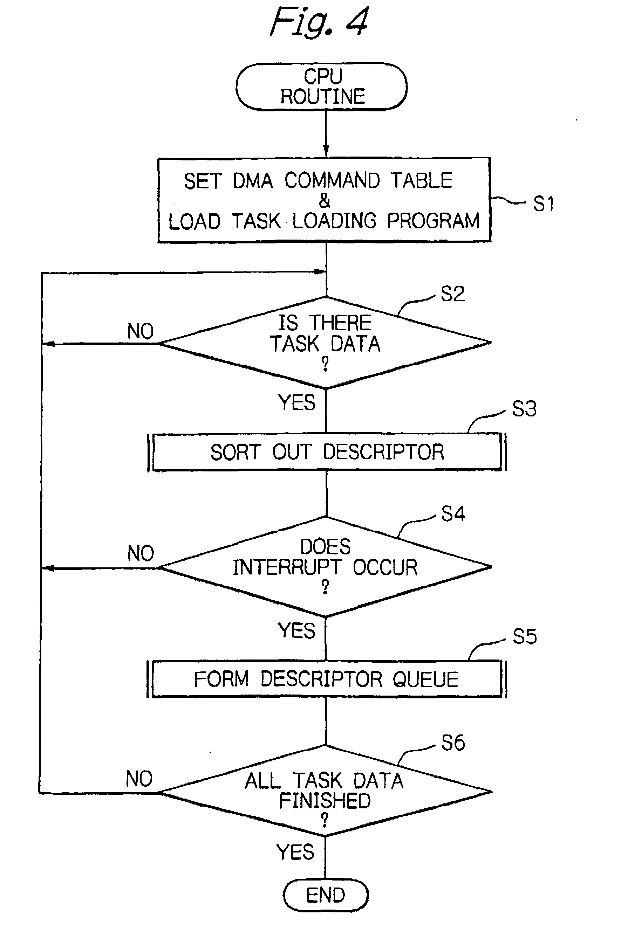

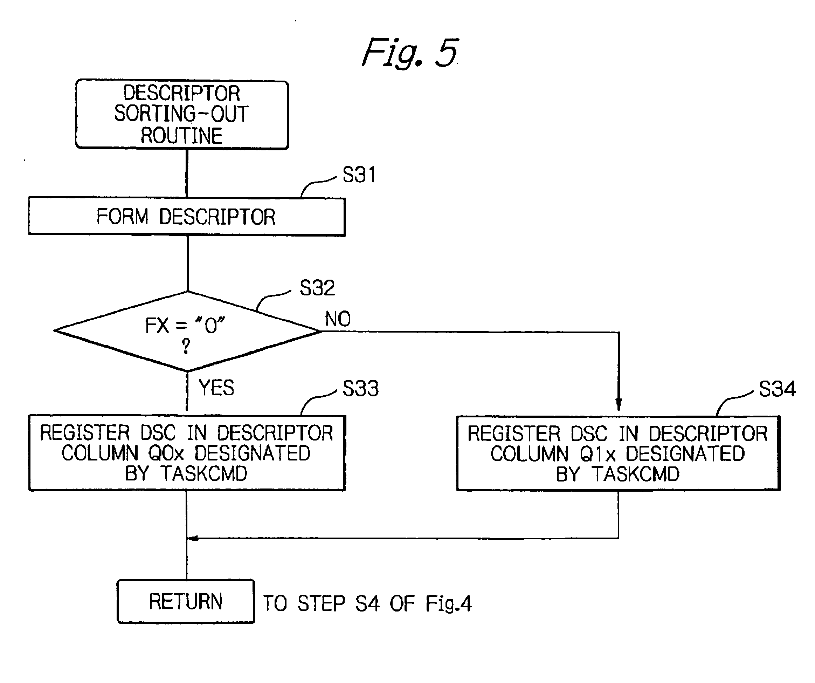

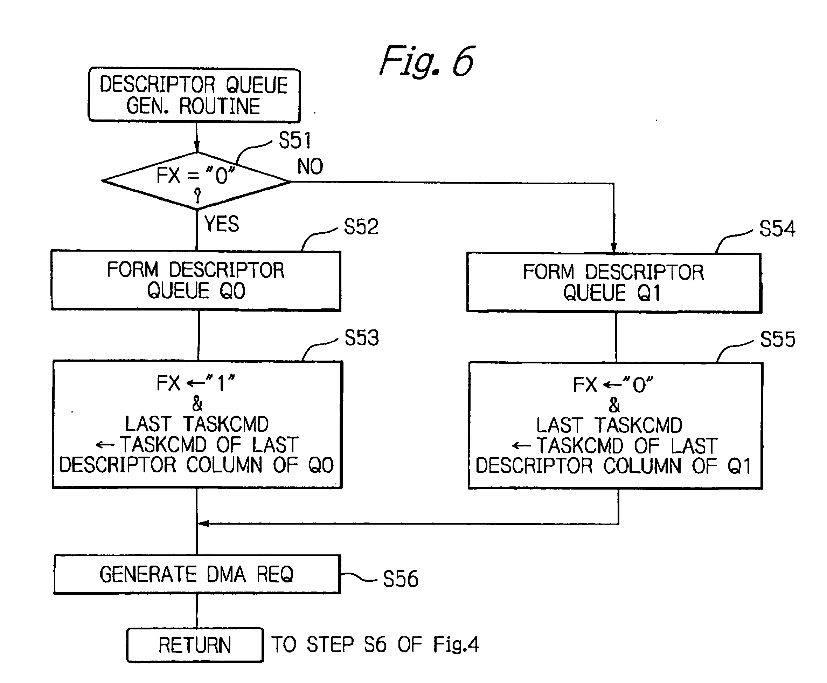

The operation of the CPU 1 (or the descriptor queue forming unit 6) of the information processing apparatus of Fig. 1 will be explained with reference to Figs. 4, 5 and 6.

Fig. 4 is a flowchart showing the entire operation of the CPU 1 of Fig. 1, Fig. 5 is a detailed flowchart showing the descriptor sorting-out step of Fig. 4, and Fig. 6 is a detailed flowchart showing the descriptor queue forming step of Fig. 4.

Note that a flag FX is initialized at a definite value such as "0" and a value LAST TASKCMD is initialized at a definite value by an initial routine (not shown).

As shown in Fig. 4, at step S1, DMA commands formed by information for writing a task loading program LOAD PRG, task programs TASK PRG and intermediate data INTDA1 into the array-type processor unit 23, information for reading intermediate data INTDA2 from the array-type processor unit 23 and the like are formed and are stored in the DMA controller 27. In this case, one DMA command is formed to correspond to each process carried out by the DMA controller 27 and is constructed by a read (source) address RDADR showing a start address of a memory area of the memory 3 or the internal memory of the array-type processor unit 23 from which intermediate data or a task program to be transmitted or the like is read; a write (destination) address WRADR showing a start address of a memory area of the memory 3 or the internal memory of the array-type processor unit 23 from which intermediate data or a task program to be transmitted is stored; a transfer data length LENGTH showing a data length of intermediate data or task program to be loaded in the array-type processor unit 23 or a data length of intermediate data to be read or saved from the array-type processor unit 23; a read enable flag RE for showing whether a task program and intermediate data is loaded into the array-type processor unit 23, or intermediate data is read or saved from the array-type processor unit 23; and an interrupt flag DINT showing whether or not generation of an interrupt signal for the CPU 1 is necessary when processing of one DMA command is completed.

Also, at step S1, after various kinds of DMA commands are set in the DMA controller 27, one of the DMA commands is indicated to request loading of a task loading program into the array-type processor unit 23. Note that the task loading program is used for performing a loading task by which the array-type processor unit 23 loads task programs into the internal memory thereof. This loading task also includes a processing for determining whether or not loading of a new task program is required by receiving a task command from the input FIFO 24, and a processing for indicating one of the DMA commands set in the DMA controller 27 in accordance with the received task command from the input FIFO 24.

Next, at step S2, the CPU 1 determines whether or not task data to be processed by the stream processor 2 is present in the memory 3. Only when such task data is present in the memory 3, does the control proceed to step S3 which carries out a sorting-out process for sorting-out descriptors. This descriptor sorting-out process is shown in detail in Fig. 5; however, the descriptor sorting-out process can be carried out by the descriptor queue forming unit 6.

As shown in Fig. 5, at step S31, the CPU 1 forms a descriptor corresponding to the task data which is determined by step S2 of Fig. 4 to be present in the memory 3. Then, at step S32, the CPU 1 determines whether the flag FX is "0" or "1". When the flag FX is determined to be "0", the control proceeds to step S3 which sorts out or registers the descriptor formed at step S31 in a descriptor column Q0x designated by task command TASKCMD (=x) such as A, B, ···.

On the other hand, when the flag FX is determined to be "1" at step S32, the control proceeds to step S34 which sorts out or registers the descriptor formed at step S31 in a descriptor column Q1x designated by task command TASKCMD (=x) such as A, B, ···.

Returning to step S4 of Fig. 4, while the CPU 1 carries out a sorting-out process as shown in Fig. 5, the CPU 1 awaits an interrupt signal from the stream processor 2. This interrupt signal shows a completion of a loading operation of a task loading program or a completion of a task. Only when the CPU 1 has received such an interrupt signal, does the control proceed to step S5 which forms a descriptor queue by using the descriptor columns Q0x or Q1x. This descriptor queue forming process is shown in detail in Fig. 6; however, the queue forming process can be carried out by the descriptor queue forming unit 6.

Note that the interrupt signal at step S4 is an interrupt signal INT1 as illustrated in Fig. 1 generated by the DMA controller 27 when one task is completed or an interrupt signal INT2 as illustrated in Fig. 1 generated by the input DMA circuit 21 when loading of a task loading program into the array-type processor unit 23 is completed.

As shown in Fig. 6, at step S51, the CPU 1 determines whether the flag FX is "0" or "1". When the flag FX is determined to be "0", the control proceeds to step S52 which forms a descriptor queue Q0 so that the descriptor column having the same task command as the value LAST TASKCMD is at a first position of the descriptor queue Q0. Then, the descriptor queue Q0 is stored in the memory 3. Then, at step S53, the CPU 1 writes "1" into the flag FX and makes the value LAST TASKCMD be the task command value of the last descriptor column of the descriptor queue Q0.

On the other hand, when the flag FX is determined to be "1" at step S51, the control proceeds to step S54 which forms a descriptor queue Q1 so that the descriptor column having the same task command as the value LAST TASKCHD is at a first position of the descriptor queue Q1. Then, the descriptor queue Q1 is stored in the memory 3. Then, at step S55, the CPU I writes "0" into the flag FX and makes the value LAST TASKCMD be the task command value of the last descriptor column of the descriptor queue Q1.

At step S56, the CPU 1 performs a DMA request operation upon the stream processor 2 by setting the start address of the first descriptor of the descriptor queue Q0 or Q1 into the descriptor pointer of the input DMA circuit 21.

When the CPU 1 completes the processing as shown in Fig. 6, the control returns to step S6 of Fig. 4 which determines whether the processings for all task data to be processed by the stream processor 2 are finished. As a result, when the processings for all task data are not finished, the control returns to step S2, thus repeating the control at steps S3 to S6. Otherwise, the routine of Fig. 4 is completed.

Note that, at step S52 and S54, when descriptor columns are linked to each other to form the descriptor queue Q0 or Q1, a descriptor (see: DSCAB of Fig. 3) having a type TYPE (=0) and an input address IADR the same as the start address of the descriptor column subsequent to one preceding descriptor column are added to the end of the preceding descriptor column.

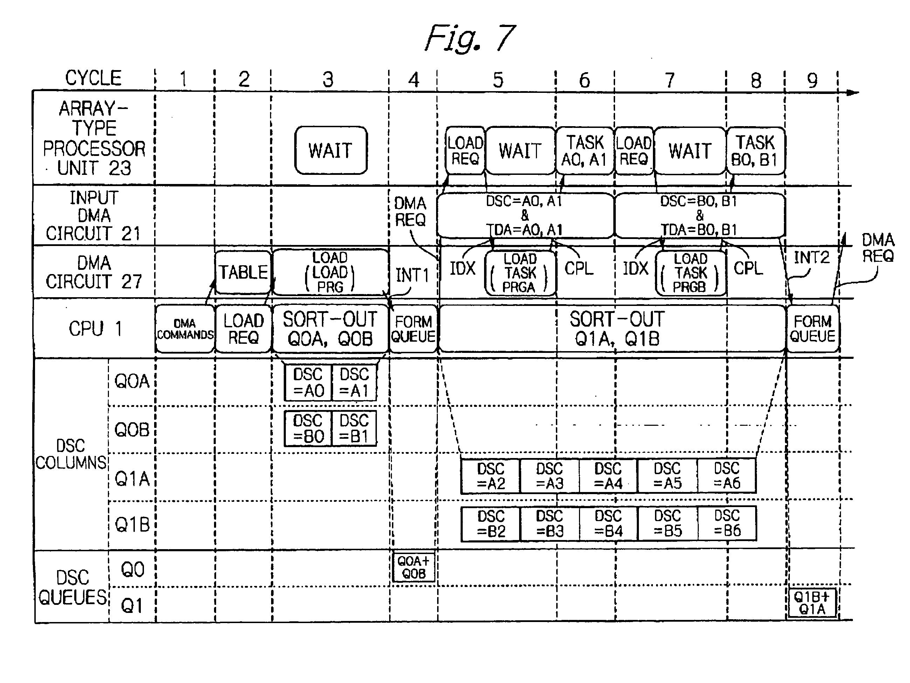

The entire operation of the information processing apparatus of Fig. 1 is explained next with reference to a timing diagram of Fig. 7.

In Fig. 7, the operations of the CPU 1 and the stream processor 2 are illustrated such that the CPU 1 operates the stream processor 2 to carry out tasks A0 to A6 and tasks B0 to B6. Here, the tasks A0 to A6 show the processing of a task program A upon task data A0 to A6, respectively, and the tasks B0 to B6 show the processing of a task program B upon task data B0 to B6, respectively. Also, descriptors A0 to A6 are formed to correspond to the task data A0 to A6, respectively, and descriptors B0 to B6 are formed to correspond to the task data B0 to B6, respectively.

Note that a task data and a descriptor corresponding to a task such as A1 are given the same reference as the reference of the task in order to understand the relationship among the tasks, the task data and the descriptors.

First, at cycle 1, the CPU 1 forms DMA commands for loading a task loading program LOAD PRG and task programs such as A and B.

Next, at cycle 2, the CPU 1 stores the DMA commands in the DMA controller 27 of the stream processor 2 in the form of a DMA command table. Also, the CPU 1 generates a load request for loading the task loading program LOAD PRG into the array-type processor unit 23 and transmits it to the DMA controller 27. Note that processings of cycles 1 and 2 are carried out only once at the beginning of the operation of the information processing apparatus of Fig. 1.

Next, at cycle 3, when the DMA controller 27 receives the load request from the CPU 1, the DMA controller 27 reads the task loading program LOAD PRG from the memory 3 in accordance with the DMA command designated by the CPU 1, and loads the task loading program LOAD PRG into the array-type processor unit 23. Then, after the loading of the task loading program LOAD PRG into the array-type processor unit 23 is completed, the DMA controller 27 generates an interrupt signal INT for showing the completion of loading the task loading program LOAD PRG and transmits it to the CPU 1.

Also, while the DMA controller 27 is loading the task loading program LOAD PRG into the array-type processor unit 23, the CPU 1 forms descriptors each corresponding to one task data stored in the memory 3 and sorts out the descriptors in accordance with the processing as shown in Fig. 5. Here, descriptors A0, A1, B0 and B1 are formed to correspond to task data A0, A1, B0 and B1 stored in the memory 3, and then, a descriptor column Q0A is formed by linking the descriptors A0 and A1 to each other while a descriptor column Q0B is formed by linking the descriptors B0 and B1 to each other.

Next, at cycle 4, when the CPU 1 receives the interrupt signal INT1 showing the completion of loading the task loading program LOAD PRG from the DMA controller 27, the CPU 1 forms a descriptor queue Q0 by linking the descriptor columns Q0A and Q0B to each other. Then, the CPU 1 writes the start address of the first descriptor column Q0A of the descriptor column Q0 into the descriptor pointer of the input DMA circuit 2, thus starting a data DMA request to read the descriptors A0, A1, B0 and B1.

Note that, since the value LAST TASKCMD is the initial value, the sequence of the descriptor columns Q0A and Q0B depends on the initial value; however, if the initial value is neither A nor B, this sequence is arbitrary.

Next, at cycle 5, the input DMA circuit 21 reads the descriptor (DSC) A0 from the memory 3 in accordance with the value of the descriptor pointer of the input DMA circuit 21, and extracts a task command TASKCMD, a transaction identifier TID and an input data size ISIZE from the descriptor A0 to transmit them via the input FIFO 24 to the array-type processor unit 23. Also, the input DMA circuit 21 reads task data (DTA) A0 designated by the descriptor (DSC) A0 from the memory 3 and transmits the task data A0 via the input FIFO 24 to the array-type processor unit 23.

Also, when the array-type processor unit 23 has received the task command A0 of the descriptor A0, the array-type processor unit 23 determines whether or not a task program A designated by the task command A0 is already loaded thereinto. In this case, since the task program A is not loaded yet, the array-type processor unit 23 generates a load request for the task program A by transmitting index information IDX for indicating a corresponding DMA command to the DMA controller 27.

The DMA controller 27 reads the task program A from the memory 3 in accordance with the DMA command indicated by the array-type processor unit 23 to transmit the task program A to the array-type processor unit 23. When the DMA controller 27 completes the loading operation of the task program A, the DMA controller 27 generates a load completion signal CPL and transmits it to the array-type processor unit 23.

Subsequently, the input DMA circuit 21 reads the descriptor (DSC) A1 and the task data (TDA) A1 following the descriptor A0 and the task data A0 from the memory 3, and extracts a task command TASKCMD, a transaction identifier TID and an input data size ISIZE from the descriptor A1 to transmit them via the input FIFO 24.

Note that the descriptor A1 and the task data A1 are read by the input DMA circuit 21 in accordance with the incremented value of the descriptor pointer therein.

Next, at cycle 6, when the array-type processor unit 23 has received the load completion signal CPL from the DMA controller 27, the array-type processor unit 23 receives the task data A0 from the input FIF0 24 to perform the task A0 upon the task data A0 using the task program A. After the task A0 is completed, the array-type processor unit 23 receives the task command A1 of the descriptor A1, the array-type processor unit 23 determines whether or not the task program A designated by the task command A1 is already loaded thereinto. In this case, since the task program A is already loaded, the array-type processor unit 23 receives the task data A1 from the input FIFO 24 to perform the task A1 upon the task data A1 using the task program A.

Next, at cycle 7, after reading of the descriptor (DSC) A1 and the task data (TDA) A1 from the memory 3 is completed, the input DMA circuit 21 reads the descriptor (DSC) B0 from the memory 3 in accordance with the structure of the descriptor queue Q0, and extracts a task command TASKCMD, a transaction identifier TID and an input data size ISIZE from the descriptor B0 to transmit them via the input FIF0 24 to the array-type processor unit 23. Also, the input DMA circuit 21 reads task data (DTA) B0 designated by the descriptor (DSC) B0 from the memory 3 and transmits the task data B0 via the input FIFO 24 to the array-type processor unit 23.

Also, when the processing of the task A1 is completed, the array-type processor unit 23 receives the task command B0 of the descriptor B0, the array-type processor unit 23 determines whether or not a task program B designated by the task command B0 is already loaded thereinto. In this case, since the task program B is not loaded yet, the array-type processor unit 23 generates a load request for the task program B by transmitting index information IDX for indicating a corresponding DMA command to the DMA controller 27.

The DMA controller 27 reads the task program B from the memory 3 in accordance with the DMA command indicated by the array-type processor unit 23 to transmit the task program B to the array-type processor unit 23. When the DMA controller 27 completes the loading operation of the task program B, the DMA controller 27 generates a load completion signal CPL and transmits it to the array-type processor unit 23.

Subsequently, the input DMA circuit 21 reads the descriptor (DSC) B1 and the task data (TDA) B1 following the descriptor B0 and the task data B0 from the memory 3, and extracts a task command TASKCMD, a transaction identifier TID and an input data size ISIZE from the descriptor B1 to transmit them via the input FIFO 24.

Note that the descriptor B1 and the task data B1 are read by the input DMA circuit 21 in accordance with the incremented value of the descriptor pointer therein.

Next, at cycle 8, when the array-type processor unit 23 has received the load completion signal CPL from the DMA controller 27, the array-type processor unit 23 receives the task data B0 from the input FIF0 24 to perform the task B0 upon the task data B0 using the task program B. After the task B0 is completed, the array-type processor unit 23 receives the task command B1 of the descriptor B1, the array-type processor unit 23 determines whether or not the task program B designated by the task command B1 is already loaded thereinto. In this case, since the task program B is already loaded, the array-type processor unit 23 receives the task data B1 from the input FIFO 24 to perform the task B1 upon the task data B1 using the task program B. After the task B1 is completed, the input DMA circuit 21 generates an interrupt signal INT2 showing a completion of the processing of the task B1 and transmits it to the CPU 1.

Also, during cycles 5, 6, 7 and 8, while the stream processor 2 carries out the above-mentioned processings, the CPU 1 forms descriptors each corresponding to one task data stored in the memory 3 and sorts out the descriptors in accordance with the processing as shown in Fig. 5. Here, descriptors A2, A3, A4, A5, A6, B2, B3, B4, B5 and B6 are formed to correspond to task data A2, A3, A4, A5, A6, B2, B3, B4, B5 and B6 stored in the memory 3, and then, a descriptor column Q1A is formed by linking the descriptors A2, A3, A4, A5 and A6 to each other while a descriptor column Q1B is formed by linking the descriptors B2, B3, B4, B5 and B6 to each other.

Next, at cycle 9, when the CPU 1 receives the interrupt signal INT2 showing the completion of the processing by the descriptor queue Q0 from the input DMA circuit 21, the CPU 1 forms a descriptor queue Q1 by linking the descriptor columns Q1A and Q1B to each other. Then, the CPU 1 writes the start address of the first descriptor column Q1A of the descriptor column Q1 into the descriptor pointer of the input DMA circuit 21, thus starting a data DMA request to read the descriptors A2, A3, A4, A5, A6, B2, B3, B4, B5 and B6.

As explained hereinabove, according to the information processing apparatus of the present invention, descriptor columns are formed by linking descriptors having the same task command to each other, and one descriptor queue is formed by linking the descriptor columns, so that the descriptors are successively read in accordance with the structure of the descriptor queue to perform successive tasks upon task data corresponding to the read descriptors, and the number of load operations of task programs into the array-type processor unit 23 can be minimized. Therefore, the throughput of data processing by the stream processor can be enhanced to improve the processing ability of the information apparatus.

## Claims

1. An information processing apparatus comprising:
a descriptor queue forming unit (6) adapted to form descriptors (DSC) each including one task command (TASKCMD) for designating one program (TASK PRG) and corresponding to one task data (TDA) processed by said program, form descriptor columns (Q0A, Q0B; Q1A, Q1B) each formed by linking at least two of said descriptors including the same task command, and form descriptor queues (Q0, Q1) each formed by linking said descriptor columns;
a memory (3) adapted to store said task data and said descriptor queues; and
a stream processor (2) adapted to sequentially read said descriptors from said memory in accordance with a structure of said descriptor queues and perform processings upon said task data corresponding to said read descriptors, respectively, using respective ones of said programs indicated by the task commands of said read descriptors, respectively.

2. The information processing apparatus as set forth in claim 1, wherein said memory comprises at least one descriptor queue area adapted to store said descriptor queues, and wherein, while said stream processor is carrying out a processing in accordance with the structure of one of said descriptor queues stored in said descriptor queue area of said memory, said descriptor queue forming unit forms another of said descriptor queues used in the next processing to be carried out by said stream processor and stores the other of said descriptor queues in said descriptor queue area of said memory.

3. The information processing apparatus as set forth in claim 1, wherein, if there is a common task command in said descriptor columns between a preceding one of said descriptor queues and another of said descriptor queues subsequent to the preceding one of said descriptor queues, said descriptor queue forming unit makes the task command of the last descriptor column of said preceding one of said descriptor queues coincide with the task command of the first descriptor column of said other one of said descriptor queues.

4. The information processing apparatus as set forth in claim 2, wherein said memory further comprises a flag area adapted to store a flag (FX) for indicating whether said stream processor is carrying out said processing in accordance with the structure of the one of said descriptor queues or the other of said descriptor queues.

5. The information processing apparatus as set forth in claim 3, wherein said memory further comprises a last task command area (LAST TASKCMD) for indicating a task command of the last descriptor column of the preceding one of said descriptor queues.

6. The information processing apparatus as set forth in claim 4, wherein said flag is reversed every time the processings of said stream processor are completed.

7. The information processing apparatus as set forth in claim 1, wherein said descriptor queue forming unit provides an additional descriptor (PSCAB) as a last descriptor of a preceding one of said descriptor columns, said additional descriptor having a link pointer into which a start address of another of said descriptor columns subsequent to said preceding one of said descriptor columns is written.

8. The information processing apparatus as set forth in claim 7, wherein each of said descriptors and said additional descriptor has a type field (TYPE) so that said descriptors are identified from said additional descriptor.

9. A data processing method for processing task data in accordance with predetermined programs using a stream processor (2) comprising:
forming descriptors (DSC) each including one task command (TASKCMD) for designating one program (TASK PRG) and corresponding to one task data (TDA) processed by said program using a central processing unit (1);
forming descriptor columns (Q0A, Q0B; Q1A, Q1B) each formed by linking at least two of said descriptors including the same task command using said central processing unit;
forming descriptor queues (Q0, Q1) each formed by linking said descriptor columns using said central processing unit;
storing said task data and said descriptor queues in a memory (3) using said central processing unit;
sequentially reading said descriptors from said memory in accordance with a structure of said descriptor queues using said stream processor; and
performing processings upon said task data corresponding to said read descriptors, respectively, using respective ones of said programs indicated by the task commands of said read descriptors, respectively, using said stream processor.

10. The data processing method as set forth in claim 9, wherein said memory comprises at least one descriptor queue area adapted to store said descriptor queues, and wherein, while said stream processor is carrying out a processing in accordance with the structure of one of said descriptor queues stored in said descriptor queue area of said memory, said descriptor queue forming unit forms another of said descriptor queues used in the next processing to be carried out by said stream processor and stores the other of said descriptor queues in said descriptor queue area of said memory.

11. The data processing method as set forth in claim 9, wherein, if there is a common task command in said descriptor columns between a preceding one of said descriptor queues and another of said descriptor queues subsequent to the preceding one of said descriptor queues, said descriptor queue forming unit makes the task command of the last descriptor column of said preceding one of said descriptor queues coincide with the task command of the first descriptor column of said other one of said descriptor queues.

12. The data processing method as set forth in claim 10, wherein said memory further comprises a flag area adapted to store a flag (FX) for indicating whether said stream processor is carrying out said processing in accordance with the structure of the one of said descriptor queues or the other of said descriptor queues.

13. The data processing method as set forth in claim 11, wherein said memory further comprises a last task command area (LAST TASKCMD) for indicating a task command of the last descriptor column of the preceding one of said descriptor queues.

14. The data processing method as set forth in claim 12, wherein said flag is reversed every time the processings of said stream processor are completed.

15. The data processing method as set forth in claim 9, further comprising providing an additional descriptor (DSCAB) as a last descriptor of a preceding one of said descriptor columns, said additional descriptor having a link pointer into which a start address of another of said descriptor columns subsequent to said preceding one of said descriptor columns is written.

16. The data processing method as set forth in claim 15, wherein each of said descriptors and said additional descriptor has a type field (TYPE) so that said descriptors are identified from said additional descriptor.
